# EUROPÄISCHE PATENTSCHRIFT

(11) **EP 0 633 108 B1**
(45) Veröffentlichungstag und Bekanntmachung des Hinweises auf die Patenterteilung: **10.06.1998**
(21) Anmeldenummer: 94105179.9
(22) Anmeldetag: 31.03.1994
(51) Int. Cl.: B29B 17/00, B29B 13/06, B29B 13/02, C08G 63/80, B29K 67/00

(54) **Verfahren und Vorrichtung zur Wiederaufbereitung von festem Polyestermaterial**
Process and device for recycling rigid polyester
Procédé et dispositif pour le recyclage de polyester rigide

(30) Priorität: 30.04.1993 DE 4314345
(43) Veröffentlichungstag der Anmeldung: 11.01.1995
(73) Patentinhaber: Wiltzer, Karl-Heinz, 07422 Bad Blankenburg (DE); Lausmann, Peter, 07407 Rudolstadt (DE)
(72) Erfinder: Unger,Reinhard Dr., D-03149 Forst (DE); Sieckmann, Hartmut, D-99425 Weimar (DE); Wiltzer,Karl-Heinz, D-07422 Bad Blankenburg (DE)
(74) Vertreter: Feldkamp, Rainer, Dipl.-Ing.

(56) Entgegenhaltungen:
- EP-A- 0 336 520
- EP-A- 0 422 282
- EP-A- 0 483 665
- DE-A- 1 420 366
- US-A- 4 138 374
- DATABASE WPI Section Ch, Week 8822, Derwent Publications Ltd., London, GB; Class AFE, AN 88-148025 C22! & DD-A-253 036 (VEB CHEMWERK WARNKE) 6. Januar 1988
- P. M. SUBRAMANIAN - (E. I. DU PONT DE NEMOURS AND CO. INC.) 'MODIFICATION OF THE TOUGHNESS AND RHEOLOGICAL PROPERTIES OF VIRGIN AND RECYCLED PET. (FROM THE PROCEEDINGS OF THE "COMPALLOY" 1990).' 9. März 1990 , SCHOTLAND BUSINESS RESEARCH INC. , PRINCETON N.J. U.S.A. * Seite 393 - Seite 414 * * Seite 396, Zeile 14 - Seite 397, Zeile 9 * * Abbildung II; Tabellen I,III,IV *

## Beschreibung

Die Erfindung bezieht sich auf ein Verfahren zur Wiederaufbereitung von festem Polyestermaterial sowie auf eine Vorrichtung zur Durchführung des Verfahrens.

Derartiges Polyestermaterial (Polyäthylenterephthalat oder PET) fällt im wesentlichen sortenrein in einem Stoffkreislauf nach der bestimmungsgerechten Anwendung als Recyclingmaterial oder als Polyesterredukt/ -Abprodukt an.

Zur Bearbeitung von Polyester in fester Phase sind Verfahren unter Anwendung von Inertgas, Vakuum und erhöhter Temperatur bekannt. Dabei wird häufig das Polyester spezifischen Bedingungen unterworfen, wie dies in der DE-OS 31 05 767 beschrieben ist.

Einer Reihe bekannter Verfahren für das Recycling von PET-Produktionsabfall ist gemeinsam, daß das Problem des Aufschmelzens durch Vermischen von Recyclingmaterial mit Glykol oder Dikarbonsäureester (Veresterungsprodukt) z.B. in der entsprechenden Verarbeitungsstufe des Herstellungsprozesses gelöst wird. Bei dieser Verfahrensweise (GB-PS 1 254 209) tritt eine Hydrolyse bzw. Glykolyse der langkettigen Moleküle und eine Vermischung der thermisch beanspruchten und ggf. geschädigten Moleküle mit dem reagierenden Veresterungsprodukt ein. Das Material muß erneut den Veresterungsprozeß und den Polykondensationsprozeß mit der damit verbundenen thermischen Beanspruchung durchlaufen. Durch Nebenreaktionen werden Fehlstellen in den kondensierenden Polymermolekülen verursacht, da alle durch Gleichgewichtreaktion vorhandenen Stoffe, z.B. auch Aldehyde und Ätherverbindungen, bzw. vernetzte Produkte mit dem Recyclingmaterial eingeschleust werden.

Aus der DD-A1 253 036 ist weiterhin ein Verfahren zur Herstellung eines verspritzbaren Polyestergranulates bekannt, bei dem unpräparierte Polyesterabfälle in einem Autoklaven unter Vakuum aufgeschmolzen werden. Irgendeine Vorbehandlung der Polyesterabfälle findet hierbei nicht statt.

Der Erfindung liegt die Aufgabe zugrunde, ein Verfahren der eingangs genannten Art sowie eine Vorrichtung zur Durchführung des Verfahrens zu schaffen, das bzw. die eine Aufbereitung von Polyestermaterial mit einer minimalen Verarbeitungszeit, mit einer geringst möglichen thermischen Belastung und unter Zumischung möglichst geringer Mengen an Primärmaterial zu einem hochwertigen Endprodukt ermöglicht.

Diese Aufgabe wird durch die in den Ansprüchen 1 bzw. 9 angegebenen Merkmale gelöst.

Vorteilhafte Ausgestaltungen und Weiterbildungen der Erfindung ergeben sich aus den jeweiligen Unteransprüchen.

Durch das erfindungsgemäße Verfahren ist es möglich, Abfallmaterial aus Polyethylenterephthalat (PET) in fester Form und höherer Ausgangsviskosität (Recyclat) für eine multivalente Wiederverwertung aufzubereiten und auf eine hohe Viskosität nachzukondensieren. Das Verfahren beinhaltet die chemische Regenerierung und Umwandlung des Recyclates in der Mischung mit einer Primärkomponente in kontinuierlich und diskontinuierlich arbeitenden Systemen zu einem homogenen Produkt.

Das Grundprinzip des Verfahrens besteht darin, das wiederaufzubereitende Material (Recyclingkomponente) in einem ersten Schritt im Gasstrom zu erwärmen, zu kristallisieren, zu trocknen und anschließend die Festphasenkondensation bei hoher Temperatur im Gasstrom abzuschließen. Ein in einem zweiten Schritt durchgeführter Umwandlungsprozess erfordert das Mischen des so bearbeiteten Materials mit einer zweiten Komponente, einem hydroxylendgruppenhaltigen Kondensat. Dieses Kondensat wird in einem Schmelzreaktor vorgelegt.

Die Recyclingkomponente enthält vorzugsweise einen amorphen Materialanteil von mehr als 80%.

Diese Komponente weist als Mahlgut vorzugsweise eine Dichte von mehr als 0,1 kg/l auf.

Das Recyclingkomponente wird in dem ersten Schritt in fester Phase im Gasstrom von allen flüchtigen Bestandteilen und Reaktionsprodukten befreit und nachkondensiert.

In diesem ersten Schritt wird die Recyclingkomponente bei Temperaturen von 140°C bis 210°C im Gasstrom behandelt. Dabei tritt eine Materialstrukturänderung ein, die einem Sintereffekt vergleichbar ist. Die Recyclingkomponente wird anschließend weiter auf max. 230°C aufgeheizt.

Das Material mit Sintereffekt der Recyclingkomponente wird vorzugsweise in einem Luftstrom über einen Zeitraum von 120 min. bei 190°C bis 230°C kondensiert.

Nach dieser Behandlungszeit im Luftstrom wird in die Recyclingkomponente vorzugsweise Stickstoff mit einer Temperatur von 200°C bis 255°C eingeleitet.

In dem zweiten Schritt reagiert die so vorbehandelte Recyclingkomponente in Mischung mit einer Primärkomponente bestehend aus einem hochmolekularen hydroxylendgruppenhaltigen Kondensat. Durch Umlagerungsreaktion (dominierend ist die Polyumesterung) entsteht aus der extrem langkettigen und hydroxylgruppenarmen Recyclingkomponente ein Polykondensat (Reaktionsprodukt) mit einer normalen Verteilung des Molekulargewichts im Gleichgewichtszustand.

Die Recyclingkomponente wird hierbei vorzugsweise bis zu 60% in der Primärkomponente gemischt.

Die Primärkomponente hat vorzugsweise einen Gehalt an COOH-Endgruppen von weniger als 35% myäqu/g und einen Gehalt an OH-Endgruppen von mehr als 58 myäqu/g.

Die Primärkomponente hat vorzugsweise vor der Zumischung der Recyclingkomponente einen Polykondensationsgrad im Bereich von 50 bis 135 Einheiten.

Durch das erfindungsgemäße Verfahren ist es möglich, die Konzentration der Reaktanden, die bei thermischer Belastung des Materials während der Verarbeitungsprozesse Nebenreaktionen auslösen, niedrig zu halten, so daß eine qualitativ hochwertige Schmelze hergestellt wird.

Bei der Zumischung der Recyclingkomponente zur Primärkomponente, die hydroxylendgruppenhaltig ist und deren mittleres Molekulargewicht unter dem der Recyclingkomponente liegt, tritt keine Glykose sondern dominierend eine Polyumesterung ein. Bei der Zumischung tritt weiterhin keine Hydrolyse oder Methanolyse der langkettigen Verbindungen des Recyclingmaterials auf. Daher ist eine bei der Weiterverarbeitung wenig chemisch abbauende Polymerschmelzemischung herstellbar. Es treten ferner keine unkontrollierbaren Nachreaktionen auf. Die aus dem Material hergestellten Produkte können infolge der erreichten Materialqualität erneut wiederverarbeitet werden.

Die erfindungsgemäße Vorrichtung weist einen mit einem Rührwerk und Einbauten versehenen schachtförmigen Behälter auf, in den die Recyclingkomponente in fein verteilter Form über eine Fördereinrichtung und eine volumetrische Dosierung eingeleitet wird.

In das Innere des Behälters kann Luft bzw. Gas durch Einspeisungsstellen eingeleitet werden, die über über die Höhe des Behäters verteilt sind, wobei die Temperatur zwischen 140 °C bis zu 230°C liegt und ein Temperaturgradient erzeugt wird.

Zur Herstellung der Fließfähigkeit versetzt das Rührwerk die so behandelte Recyclingkomponente in Drehung, wodurch sie unter der Wirkung der Einbauten die kompakte Struktur verliert, zerteilt und zerkleinert wird.

An dem am unteren Ende des Behälters angeordneten Ausgang ist eine als Agglomeratedosierung wirkende Einrichtung angeordnet, von der aus das so behandelte Recyclingmaterial gegebenenfalls über eine Förderschnecke und eine Schleuse bzw. bei kontinuierlicher Betriebsweise über einen Extruder in einen Schmelzreaktor abgegeben wird.

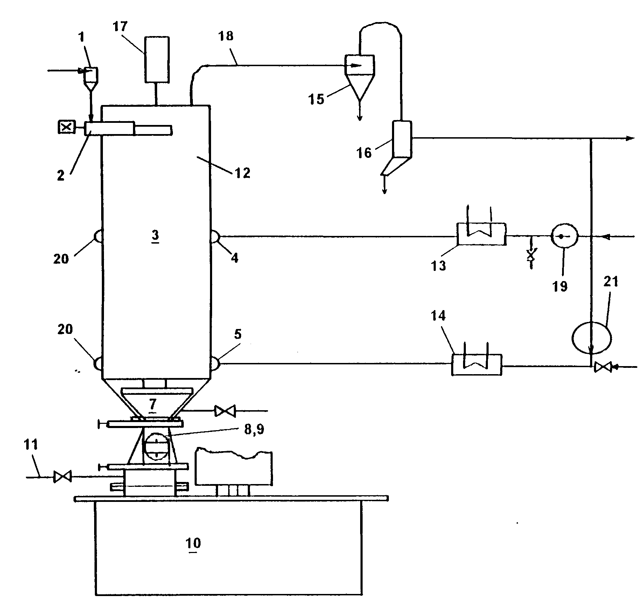

Ausführungsbeispiele der Erfindung werden nachfolgend anhand von Beispielen sowie einer in der Zeichnung dargestellten Ausführungsform der Vorrichtung näher erläutert.

Die in der Zeichnung dargestellte Ausführungsform der Vorrichtung weist einen mit einem nicht dargestellten Rührwerk und Einbauten versehenen schachtförmigen Behälter 3 auf, in den eine für das Verfahren vorbereitete Recyclingkomponente in fein verteilter Form über ein vorzugsweise pneumatisches Förderorgan 1 und eine volumetrische Dosierung 2 eingeleitet wird.

Diese Recyclingkomponente ist vorzugsweise ein Mahlgut mit einer Dichte von mehr als 0,1 kg/l, das zu über 80% aus amorphem Material besteht.

In den Behälter 3 wird über eine obere Speiseleitung 4 Luft und über eine untere Speiseleitung 5 Gas mit einer Temperatur von 200°C bis zu 230°C, verbunden mit der Erzeugung eines Temperaturgradienten, in das Mahlgut eingeleitet.

Bei Temperaturen von 140°C bis 210°C treten aufgrund des erreichten Energiezustandes auf die Molekularbeweglichkeit zurückzuführende Oberflächeneffekte mit dem Ergebnis einer Strukturänderung des Mahlgutes ein. Die eingeleitete Luft dient ferner zur Entfernung des dem Mahlgut anhaftenden Wassers, weiterer fremder flüchtiger Bestandteile und zur Reduzierung der Gutfeuchte. Im oberen Temperaturbereich über 190°C setzt mit der Unterschreitung der Gleichgewichtskonzentration des in der Recyclingkomponente gelösten Ethylenglykols eine Festphasenkondensation ein, die zu einer Erhöhung des Polykondensationsgrades und einer Absenkung des Hydroxylendgruppengehaltes führt. Hierfür ist eine Gutdichte größer 0,1 kg/l herzustellen, die vorzugsweise im Bereich von 0,2 bis 0,4 kg/l liegt.

Der Zeitraum, in dem die Recyclingkomponente mit dem Gas bei einer Temperatur von 190°C bis zu 230°C behandelt wird, beträgt 120 min. Vorzugsweise wird als Behandlungsgas erhitzte, trockene Luft eingesetzt. In Abhängigkeit von der Betriebsart der kontinuierlich oder diskontinuierlich arbeitenden Vorrichtung wird in geeigneter Weise ein Temperaturgradient in Richtung der Höhe des Behälters zwischen 140°C und 230°C eingestellt.

Zur Vermeidung von superkristallinen Strukturen ist eine definierte Temperatur-Zeit-Fahrweise zu realisieren. Eine der Voraussetzungen hierfür ist die Herstellung der für den Stoffübergang und das Förderverhalten geeigneten Korngröße des Materials. Zur Anpassung der Fahrweise an die gewünschten Qualitätsmerkmale gestattet das Verfahren eine Kreislaufführung des Heizmediums. Die Auf- und Nachbereitung des Heizmediums wird in alternativer Fahrweise durch Führung über Wärmeübertrager 13 und 14, Abscheider/Kühler 15 und 16, Leitung 18 sowie Pumpen 19 und 21 erreicht.

Zur Herstellung der Fließfähigkeit versetzt das nicht gezeigte Rührwerk die so behandelte Recyclingkomponente in Drehung, wodurch sie unter der Wirkung der ebenfalls nicht gezeigten Einbauten die kompakte Struktur verliert, zerteilt und zerkleinert wird.

In dieser Form gelangt sie über eine als Agglomeratedosierung 7 wirkende Einrichtung über eine Förderschnecke 8 und eine Schleuse 9, bzw. über einen Extruder, der bei der kontinuierlich arbeitenden Vorrichtung an Stelle der Schleuse steht, in einen Schmelzreaktor 10.

Es besteht die Möglichkeit, Material in einem Vorratsschuß 12 des Behälters 3 zu puffern, ohne Qualitätsminderungen zu verursachen.

In den Schmelzreaktor 10 wird über eine Leitung 11 die Primärkomponente in dosierter Form eingeleitet.

Die Primärkomponente wird als Polykondensat mit einer höheren Hydroxylendgruppenkonzentration vorher hergestellt.

In diesem Schmelzreaktor 10 findet dann die Reaktion zwischen der hydroxylendgruppenhaltigen Primärkomponente und der in fester Form zugeführten Recyclingkomponente statt. Dazu geht das Agglomerat in der vorgelegten Primärkomponente unter ständiger Wärmezufuhr in den flüssigen Zustand über. Hierbei kann die Mischungstemperatur ca. 280°C betragen.

In der aus beiden Komponenten gebildeten Schmelzmischung kondensiert als Folge der Desorption die Primärkomponente nach, während dadurch gleichzeitig in einer Gleichgewichtsreaktion die Umwandlung des in fester Phase eingespeisten Materials bewirkt wird.

Der gewünschte Reaktorfortschritt ist unter einer geeigneten Prozeßführung in einer Zeit von 120 min. zu realisieren. Der am Ende erreichte Polykondensationsgrad ist vor allem der Minimierung der Diffusionswiderstände, der Beweglichkeit bzw. dem Energiezustand der Moleküle und dem Grad der im zweiten Prozeßabschnitt der Festphasenkondensation ausgelösten Polyveresterungsreaktion zuzuschreiben. So reagiert im Verlaufe einer kurzen Behandlungszeit die Mischung im Schmelzebehälter bei Normaldruck bzw. im Vakuum zu einer homogenen Polymerschmelze, die in Strängen oder Bändern ausgetragen werden kann.

Bei dem beschriebenen Verfahren kann aufgrund der vorliegenden hydroyxylendgruppenhaltigen Primärkomponente allein durch die Mengenzufuhr an Agglomerat das für einen Wiedereinsatz erforderliche Endgruppenverhältnis und die erforderliche Viskosität eingestellt werden.

Eine Nachkondensation im flüssigem Zustand ist ebenfalls auf konventionelle Weise möglich. Die COOH-Endgruppenkonzentration überschreitet den Ausgangswert nicht, bzw. liegt bei maximal 15 myäqu/g über dem Ausgangswert der der eingesetzten Recyclingkomponente.

Zur Einstellung eines definierten Gleichgewichtszustandes für die kontrollierte Weiterverarbeitung des Reaktionsproduktes, die zu über 50% aus der Recyclingkomponente besteht, deren Eigenschaften nicht homogen und gleichartig sein kann, wird die Mischung bis zu max. 45 min. in schmelzflüssigem Zustand gehalten und in dieser Zeit einer Messung der Viskosität und des Dissoziationsgrades unterzogen. Der Polykondensationsgrad der vorgelegten Primärkomponente ist größer 25 Einheiten und liegt vorzugsweise bei 120 Einheiten.

Ausführlichere Beispiele für die Durchführung des Verfahrens sind wie folgt:

### Beispiel 1

Bei der Verarbeitung und nach dem Einsatz von Polyester-Vliesstoffen fallen (zur Verringerung des Transportaufwandes in Ballenform gepreßte) Materialmengen an, die einer stofflichen Wiederverarbeitung zugeführt werden müssen. Dieses Ausgangsmaterial wird durch eine Schneideinrichtung gefördert und dabei portioniert. Der dadurch erzeugte kontinuierliche Materialstrom gelangt nach der Vermahlung über einen Schneckenförderer in den vertikalen Recyclingprodukt-Behälter 3, in welchem die hier entstehende Gutsäule, die eine Dichte von 0,25 kg/l aufweist, im Luftstrom aufgeheizt wird. Die Gutsäule wird innerhalb von 50 min. auf 190°C gebracht, gesintert und danach auf dieser Temperatur max. 15 min. gehalten. Die gezielte Ausbildung des gewünschten Temperaturgradienten gestattet die Entfernung der flüchtigen Bestandteile bei einer minimalen thermischen Belastung. Durch eine weitere Gaseinströmung wird Luft mit einer Effektivtemperatur von 245°C eingespeist und damit das Material weitere 15 min. behandelt, bevor es über das Förderorgan in weiter zerkleineter, gesinterter Form dem Extruder am Ausgang des Behälters 3 zugeführt wird. Durch diesen gelangt das Material in den Schmelzreaktor. Dieser weist bei diesem Ausführungsbeispiel die Form eines Strömungsrohres mit je einem Eingangsstutzen für Primär- und Sekundärkomponente, mit einem statischen Mischer und mit einem Ausgangsstutzen auf. Das Reaktionsgemisch aus der Primärkomponente mit einem Polykondensationsgrad von 35 Einheiten und einer Carboxylendgruppenkonzentration von 19 myäqu./g und der Recyclingkomponente mit uneinheitlichen chemischen Eigenschaften weist nach Austrag, Abkühlung und Stranggranulierung in der Granulatmischung gute Qualitätsmerkmale, keine thermische Schädigung, einen Polykondensationsgrad von 135 Einheiten und ein Karboxyl-zu-Hydroxylendgruppenverhältnis von im Mittel 1 zu 2 auf.

Damit ist eine Mehrfach- und Wiederverarbeitung des Produktes gewährleistet.

### Beispiel 2

Die Polyesterhohlkörperfraktion aus einer Kunststoffabfall-Sortierung wird nach der Reinigung fein nachgemahlen und diskontinuierlich in den Behälter 3 gefördert. Infolge der eingestellten Kornverteilung und der Gasbeaufschlagung bildet sich eine Gutsäule im Behälter mit einer Dichte von 0,35 kg/l. Die Recyclingkomponente wird nach Erreichen der Temperatur von 190°C über eine Zeit von 40 min. mit Luft durchströmt. Durch Anhebung der Lufttemperatur auf 245°C erfolgt die Festphasenkondensation. Über die zweite Speiseleitung 5 wird das Gut anschließend mit Stickstoff mit einer Temperatur von 235°C beaufschlagt. Die Behandlungszeit beträgt 60 min.

Der Prozeß der Mahlgutzuführung zum Reaktionsbehälter wird in Abhängigkeit vom Drehmoment des Rührorgans geführt.

Im Schmelzreaktor schmilzt die Recyclingkomponente in der hier vorgelegten Primärkomponente mit den oben genannten Eigenschaften bei ständiger Wärmezufuhr bei 285°C auf. Durch Polyumesterungsreaktion über einen Zeitraum von 25 min. entsteht ein wiederverwertbares Produkt mit einem Polykondensationsgrad von 135 Einheiten und einer Carboxylendgruppenkonzentration von 21 myäqu/g.

## Patentansprüche

1. Verfahren zur Verarbeitung von Polyesterabfällen in einer kontinuierlich oder diskontinuierlich arbeitenden Vorrichtung, bestehend aus einem Reaktor oder vorgeschaltetem Behälter zur Aufbereitung der Recyclingkomponente sowie einer Schmelzereaktorvorrichtung, bei dem die Recyclingkomponente in einem ersten Schritt bei Temperaturen von 140°C bis 210°C in einem Gasstrom gesintert wird und anschließend in einem zweiten Schritt mit einer gesinterten Struktur nach einer Aufheizung auf max. 230°C mit einer hydroxylendgruppenhaltigen Polyesterprimärkomponente gemischt und über eine vorgegebene Zeit in reaktionsfähigem Zustand gehalten wird.

2. Verfahren nach Anspruch 1,
dadurch gekennzeichnet, daß die Recyclingkomponente einen amorphen Materialanteil größer 80% enthält.

3. Verfahren nach Anspruch 1 oder 2,
dadurch gekennzeichnet, daß die Recyclingkomponente mit bis zu 60% in der Polyesterprimärkomponente gemischt wird.

4. Verfahren nach einem der Ansprüche 1 bis 3,
dadurch gekenzeichnet, daß die Polyesterprimärkomponente einen COOH-Endgruppengehalt kleiner 35% myäqu/g und einen OH-Endgruppengehalt größer 58 myäqu/g aufweist.

5. Verfahren nach einem der Ansprüche 1 bis 4,
dadurch gekennzeichnet, daß die Mischung über max. 45 min. in reaktionsfähigem Zustand gehalten wird.

6. Verfahren nach einem der vorhergehenden Ansprüche,
dadurch gekennzeicchnet, daß das gesinterte Material der Recyclingkomponente im Luftstrom über einen Zeitraum von 120 min. bei 190°C bis 230°C kondensiert wird.

7. Verfahren nach einem der vorhergehenden Ansprüche,
dadurch gekennzeichnet, daß nach ca. 2 Stunden Behandlungszeit der Recyclingkomponente im Luftstrom vor der Zumischung zu der Polyesterprimärkomponente Stickstoff mit einer Temperatur von 200°C bis 255°C eingesetzt wird.

8. Verfahren nach einem der vorhergehenden Ansprüche,
dadurch gekennzeichnet, daß die Polyesterprimärkomponente vor der Zumischung einen Polykondensationsgrad im Bereich von 50 bis 135 Einheiten aufweist.

9. Vorrichtung zur Durchführung des Verfahrens nach einem der Ansprüche 1 bis 8, bei der zur Behandlung der Recyclingkomponente ein Behälter (3) mit einem Eingangsende und einem Ausgangsende zur Ausbildung einer aus dem Recyclingmaterial bestehenden Gutsäule vorgesehen ist, wobei der Behälter mit Rühr- und Auflockerungseinrichtungen versehen ist und mindestens eine Einspeisung (4,5) zur Einleitung eines auf eine Temperatur im Bereich von 150°C bis 250°C erhitzten Gases aufweist, und wobei das Eingangsende des Behälters (3) Zuführ- und Dosiereinrichtungen (1,2) zur Zuführung der Recyclingkomponente aufweist und das Ausgangsende des Behälters (3) in steuerbarer Weise mit einem Eingang eines Schmelzreaktors (10) verbunden ist, der einen zweiten Eingang (11) zur dosierten Zuführung der Primärkomponente aufweist.

10. Vorrichtung nach Anspruch 9,
dadurch gekennzeichnet, daß der Behälter (3) langgestreckt und mit obenliegendem Eingangsende angeordnet ist, und daß der Schmelzreaktor (10) unterhalb des Behälters angeordnet ist.

11. Vorrichtung nach Anspruch 9 oder 10,
dadurch gekennzeichnet, daß die mindestens eine Speiseleitung (4,5) in einer den Behälter (3) ringförmig senkrecht zu dessen Längsachse umgebenden Ringleitung (20) endet, die über eine Vielzahl von am Umfang des Behälters verteilten Öffnungen mit dessen Innenraum inn Verbindung steht.

12. Vorrichtung nach einnem der Ansprüche 9 bis 11,
dadurch gekennzeichnet, daß zwischen dem Ausgangsende des Behälters und dem ersten Eingang des Schmelzreaktors (10) ein Extruder angeordnet ist.

13. Vorrichtung nach einnem der Ansprüche 9 bis 12,
dadurch gekennzeichnet, daß zwischen dem Ausgangsende des Behälters und dem ersten Eingang des Schmelzreaktors (10) ein Pufferbehälter (12) angeordnet ist.

## Claims

1. A method of processing polyester waste in a continuously or discontinuously operating apparatus comprising a reactor or upstream container for preparing the component to be recycled and a melting reactor device, in which method, in a first step, the component to be recycled is sintered at temperatures of from 140°C to 210°C in a gas stream and then, in a second step, said component having a sintered structure is mixed with a primary polyester component containing hydroxyl end groups after heating to a maximum of 230°C and held in a reactive state for a predetermined period.

2. A method according to claim 1, characterised in that the component to be recycled has an amorphous material content greater than 80%.

3. A method according to claim 1 or claim 2, characterised in that the component to be recycled is mixed with the primary polyester component in an amount of up to 60%.

4. A method according to any one of claims 1 to 3, characterised in that the primary polyester component has COOH end group content of less than 35% milli-equivalents/g and an OH end group content greater than 58 milli-equivalents/g.

5. A method according to any one of claims 1 to 4, characterised in that the mixture is held in a reactive state for a maximum of 45 minutes.

6. A method according to any one of the preceding claims, characterised in that the sintered material of the component to be recycled is condensed in the air stream for a period of 120 minutes at from 190°C to 230°C.

7. A method according to any one of the preceding claims, characterised in that, after the component to be recycled has been treated for approximately 2 hours in the air stream and prior to its being mixed with the primary polyester component, nitrogen is added at a temperature of from 200°C to 255°C.

8. A method according to any one of the preceding claims, characterised in that, prior to mixing, the primary polyester component exhibits a polycondensation level ranging from 50 to 135 units.

9. A device for carrying out the method according to any one of claims 1 to 8, in which, for treatment of the component to be recycled, there is provided a container (3) with an inlet end and an outlet end for producing a column of material to be recycled, wherein the container is provided with stirring and dispersing apparatuses and comprises at least one feeder (4, 5) for introducing a gas heated to a temperature in the range of from 150°C to 250°C, and wherein the inlet end of the container (3) comprises supply and metering apparatuses (1, 2) for supplying the component to be recycled and the outlet end of the container (3) is connected in a controllable manner with an inlet of a melting reactor (10), which comprises a second inlet (11) for metered supply of the primary component.

10. A device according to claim 9, characterised in that the container (3) is elongate and disposed with its inlet end at the top and in that the melting reactor (10) is arranged below the container.

11. A device according to claim 9 or claim 10, characterised in that the at least one feed line (4, 5) ends in a closed circular pipeline (20) surrounding the container (3) annularly and perpendicularly to the longitudinal axis thereof, said closed circular pipeline (20) being connected with the inside of the container by a plurality of openings distributed around the circumference of the latter.

12. A device according to any one of claims 9 to 11, characterised in that an extruder is arranged between the outlet end of the container and the first inlet of the melting reactor (10).

13. A device according to any one of claims 9 to 12, characterised in that a buffer container (12) is arranged between the outlet end of the container and the first inlet of the melting reactor (10).

## Revendications

1. Procédé pour le traitement de déchets de polyester dans un dispositif opérant en continu ou en discontinu, consistant en un réacteur ou en un récipient intercalé pour le traitement du composant de recyclage ainsi qu'un dispositif à réacteur de fusion dans lequel le composant de recyclage est fritté dans une première étape à des températures de 140°C à 210°C dans un courant gazeux, est mélangé ensuite dans une deuxième étape avec une structure frittée après un chauffage à 230°C au maximum avec un composant primaire à base de polyester contenant des groupes hydroxyles terminaux et est maintenu à l'état réactif pendant une durée prédéterminée.

2. Procédé selon la revendication 1, caractérisé en ce que le composant de recyclage contient une fraction de matière amorphe supérieure à 80%.

3. Procédé selon la revendication 1 ou 2, caractérisé en ce que le composant de recyclage se trouve en mélange dans le composant primaire à base de polyester jusqu'à 60%.

4. Procédé selon l'une des revendications 1 à 3, caractérisé en ce que le composant primaire à base de polyester affiche une teneur en groupes COOH terminaux inférieure à 35% de milliéq./g et une teneur en groupes OH terminaux supérieure à 58 milléq./g.

5. Procédé selon l'une des revendications 1 à 4, caractérisé en ce que le mélange est maintenu à l'état réactif pendant 45 min. au maximum.

6. Procédé selon l'une des revendications précédentes, caractérisé en ce que la matière frittée du composant de recyclage est condensée dans un courant d'air pendant un intervalle de temps de 120 min. entre 190°C et 230°C.

7. Procédé selon l'une des revendications précédentes, caractérisé en ce que, après env. 2 heures de durée de traitement du composant de recyclage dans le courant d'air, de l'azote est utilisé à une température de 200°C à 255°C avant l'incorporation au composant primaire à base de polyester.

8. Procédé selon l'une des revendications précédentes, caractérisé en ce que le composant primaire à base de polyester présente, avant l'incorporation, un degré de polycondensation dans la plage de 50 à 135 motifs.

9. Dispositif pour la réalisation du procédé selon l'une des revendications 1 à 8, dans lequel il est prévu, pour le traitement du composant de recyclage, un récipient (3) muni d'une extrémité d'admission et d'une extrémité de sortie pour la formation d'une colonne de produit constitué par la matière de recyclage, moyennant quoi le récipient est équipé de dispositifs d'agitation et de désagrégation et comporte au moins une alimentation (4,5) pour l'introduction d'un gaz chauffé à une température dans la plage de 150°C à 250°C, l'extrémité d'arrivée de récipient (3) comporte des dispositifs d'alimentation et de dosage (1,2) pour l'introduction du composant de recyclage et l'extrémité de sortie du récipient (3) est reliée de manière contrôlable à une entrée d'un réacteur de fusion (10) qui comporte une deuxième entrée (11) pour l'alimentation dosée en le composant primaire.

10. Dispositif selon la revendication 9, caractérisé en ce que le récipient (3) est allongé et comporte une extrémité d'entrée à la partie supérieure et que le réacteur de fusion (10) est placé au-dessous du récipient.

11. Dispositif selon la revendication 9 ou 10, caractérisé en ce qu'au moins une conduite d'alimentation (4,5) débouche dans une canalisation circulaire (20) entourant le récipient (3) en forme d'anneau, perpendiculairement à son axe longitudinal qui, par l'intermédiaire de multiples orifices répartis sur le pourtour du récipient, se trouve en communication avec l'espace intérieur de celui-ci.

12. Dispositif selon l'une des revendications 9 à 11, caractérisé en ce qu'une extrudeuse est disposée entre l'extrémité de sortie du récipient et la première entrée du réacteur de fusion (10).

13. Dispositif selon l'une des revendications 9 à 12, caractérisé en ce qu'un réservoir tampon (12) est disposé entre l'extrémité de sortie du récipient et la première entrée du réacteur de fusion (10).
